# EUROPEAN PATENT APPLICATION

(11) **EP 4 596 337 A1**
(43) Date of publication of application: **06.08.2025**
(21) Application number: 23872396.9
(22) Date of filing: 27.09.2023
(51) Int. Cl.: B60S 1/38, B26D 1/04, B26D 3/00, B26D 7/01, B26D 7/02, B26D 7/08

(54) **BLADE RUBBER REGENERATION DEVICE, BLADE RUBBER REGENERATION METHOD, AND REGENERATED BLADE RUBBER MANUFACTURING METHOD**

(30) Priority: 29.09.2022 JP 2022156513; 17.04.2023 JP 2023067140
(71) Applicant: CANON KABUSHIKI KAISHA, Tokyo 146-8501 (JP)
(72) Inventor: KODAMA, Katsuya, Tokyo 146-8501 (JP); MATSUDA, Hidekazu, Tokyo 146-8501 (JP); AOYAMA, Takehiko, Tokyo 146-8501 (JP)
(74) Representative: TBK
(86) International application number: PCT/JP2023/035079
(87) International publication number: WO 2024/071174

(57) **Abstract**

Provided is a blade rubber regeneration device capable of more accurately regenerating a blade rubber of which the wiping performance has decreased. The blade rubber regeneration device comprises a blade unit for cutting the tip-end of a lip portion of the blade rubber in the longitudinal direction of the blade rubber. The regeneration device causes the blade unit to relatively move from an end portion A that is one end portion in the longitudinal direction of the blade rubber toward an end portion B that is the other end portion, to cut a part of the tip-end of the lip portion. The regeneration device comprises a lip-portion pinching member, a biasing member that abuts on and biases the end portion B of the lip portion, and a pressing member that presses the tip-end of the lip portion. The pinching member pinches at least a part of the lip portion from either side of the lip portion under a specific condition. The pressing member presses the tip-end of the lip portion before the movement.

## Description

### [Technical field]

The present disclosure relates to a blade rubber regeneration device, a blade rubber regeneration method, and a manufacturing method of a regenerated blade rubber used for a wiper blade in a wiper which cleans a wiping target object such as a windshield of a vehicle such as an automobile, a railroad vehicle, an aircraft, a ship and the like (hereinafter, also referred to simply as a "vehicle").

### [Background Art]

In a blade rubber in a wiper blade for a vehicle, a contact part that contacts with a windshield at a tip end is worn gradually by use for a long time, which causes irregular wiping or the like. A regeneration cutter for regenerating the blade rubber tip end, whose wiping performance has lowered by the long-time use of the wiper blade, by cutting off the blade rubber tip end is disclosed in Patent Document 1.

### [Citation List]

### [Patent Document]

[Patent Document 1] Japanese Patent Application Publication No. 2006-174980

### [Summary of Invention]

### [Technical Problem]

However, according to the examination by the inventors, the wiping performance of the wiper blade regenerated by the cutter for wiper-blade regeneration according to Patent Document 1 is not satisfactory at all. Recently, in an automobile, for example, a driving assistance system using a car-mounted camera has been brought into practical use, and development of an automated driving system is also promoted. Hence, at this time, in order to prevent the car-mounted camera from erroneously recognizing stains that adhere to the windshield, a considerably higher wiping performance is in demand for the wiper blades.

Thus, at least one aspect of the present disclosure is to provide a blade rubber regeneration device which can regenerate a blade rubber, whose wiping performance has lowered, with higher accuracy. Moreover, at least one aspect of the present disclosure is to provide a blade rubber regeneration method for regenerating a wiping performance of a blade rubber whose wiping performance has lowered. Furthermore, at least one aspect of the present disclosure is to provide a manufacturing method of a regenerated blade rubber whose wiping performance is at the same degree as that of a brand-new product.

### [Solution to Problem]

At least one aspect provides a blade rubber regeneration device, the blade rubber being provided on a wiper blade used for a wiper device of a windshield of a vehicle, wherein
the wiper blade comprises the blade rubber and a blade stay supporting the blade rubber,
the blade rubber has a base part, which is an attaching part of attaching the blade rubber to the blade stay, a lip portion, and a neck portion swingably connecting the lip portion to the base part,
at least a part of a tip end of the lip portion constitutes a contact part contacting with the windshield,
the regeneration device comprises a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one end part in the longitudinal direction of the blade rubber, and to relatively move toward an end part B, which is the other end part in the longitudinal direction,
the regeneration device comprises:
   a sandwiching member of sandwiching the lip portion;
   an urging member which is brought into contact with the end part B of the lip portion and urges the lip portion to a direction of the end part A; and
   a pressing member which presses the tip end of the lip portions toward the base part,
      the sandwiching member sandwiches at least a part of the lip portion from both side portions of the lip portion on a cross-sectional view in a direction orthogonal to the longitudinal direction of the blade rubber,
      the sandwiching member is disposed at a position capable of sandwiching at least a part into which the blade portion of the lip portion enters, and a position of the sandwiching member with respect to the blade rubber is fixed, and
      the pressing member presses the tip end of the lip portion toward the base part prior to relative movement of the blade portion from the end part A to the end part B.

At least one aspect provides a blade rubber regeneration method, the blade rubber being provided in a wiper blade used for a wiper device of a windshield in a vehicle,
the method comprising:
a process of fixing the blade rubber to the above regeneration device according; and
a process of cutting off a part of a tip end of a lip portion of the blade rubber by the regeneration device.

At least one aspect provides a regenerated blade rubber manufacturing method, the method regenerating a blade rubber provided in a wiper blade used for a wiper device of a windshield in a vehicle,
the method comprising:
a process of fixing the blade rubber to the above regeneration device; and
a process of obtaining the regenerated blade rubber by cutting off a part of a tip end of a lip portion of the blade rubber by the regeneration device.

### [Advantageous Effects of Invention]

According to at least one aspect of the present disclosure, a blade rubber regeneration device that can regenerate a blade rubber whose wiping performance has lowered with higher accuracy can be provided. Moreover, according to at least one aspect of the present disclosure, a blade rubber regeneration method that can recover the wiping performance of the blade rubber whose wiping performance has lowered can be provided. According to at least one aspect of the present disclosure, a manufacturing method of a regenerated blade rubber whose wiping performance is at the same degree as that of a brand-new product can be provided.

### [Brief Description of the Drawings]

[Fig. 1] Figs. 1 are schematic diagrams of a wiper blade and a blade rubber.
[Fig. 2] Figs. 2 are diagrams for explaining deformation of a lip portion.
[Fig. 3] Figs. 3 are diagrams for explaining deformation of the lip portion.
[Fig. 4] Figs. 4 are diagrams for explaining deformation of the lip portion.
[Fig. 5] Fig. 5 is a diagram for explaining deformation of the lip portion.
[Fig. 6] Fig. 6 is a schematic diagram of a blade- rubber regeneration device.
[Fig. 7] Figs. 7 are schematic diagrams for explaining a cutting unit.
[Fig. 8] Figs. 8 are schematic diagrams for explaining the cutting unit and a sandwiching member.
[Fig. 9] Figs. 9 are diagrams for explaining the sandwiching member.
[Fig. 10] Figs. 10 are diagrams for explaining a pressure member.
[Fig. 11] Figs. 11 are diagrams for explaining an urging member.
[Fig. 12] Fig. 12 is a diagram that further enlarges a surrounding of a tip end of a blade portion and the lip portion.
[Fig. 13] Fig. 13 is a diagram for explaining the urging member.
[Fig. 14] Figs. 14 are views for explaining the urging member.
[Fig. 15] Fig. 15 is an explanatory diagram of a wiping test in an example.

### [Description of Embodiments]

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily.

Hereinafter, embodiments for carrying out this disclosure will be specifically illustrated with reference to the drawings. However, the dimensions, materials, shapes, and relative arrangement of the components described in this mode are to be changed as appropriate depending on the configuration of the members to which the disclosure is applied and various conditions. That is, the scope of this disclosure is not intended to be limited to the following embodiments. Also, in the following description, components having the same functions are denoted by the same numbers in the drawings, and description thereof is omitted in some cases.

A wiper device can be used for a wiping target object such as transport equipment including a vehicle, an aircraft, a ship and the like represented by an automobile, industrial and mechanical equipment including a construction machine and the like. These transport equipment and industrial mechanical equipment are also collectively called vehicles in the following. The wiper device can be applied to a windshield of a vehicle. The windshield is not limited to a front window but includes side windows and a rear window.

In addition, the wiper device including a wiper blade can be used also for wiping target objects such as a lens device of a network camera and the like, a protective glass surface of an imaging device and the like. In the following, the wiper blade for a vehicle windshield will be explained as an example, but the wiper blade is not limited to that.

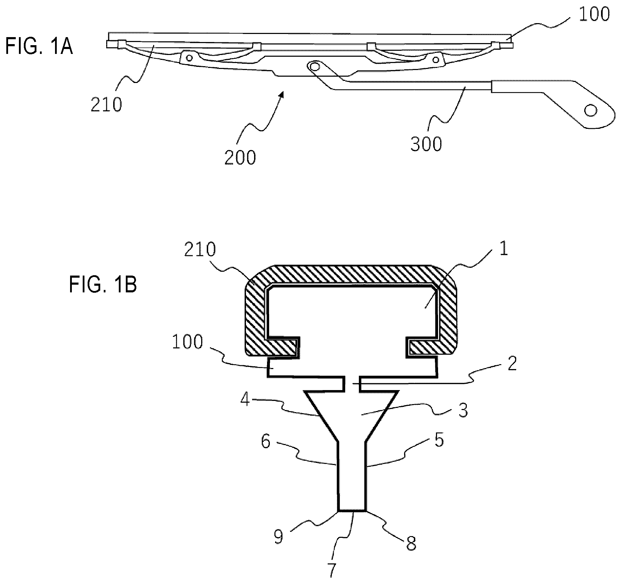

As shown in Fig. 1A, for example, the wiper device includes a wiper arm 300, and a wiper blade 200 attached to the wiper arm 300. The wiper arm 300 is cooperated with a driving motor (not shown), for example. And the wiper blade 200 has a blade rubber 100 and a blade stay 210 which supports the blade rubber 100. For the blade stay 210, besides a tournament type as shown in Fig. 1A, various publicly-known formats of support members such as a flat type can be adopted.

The blade rubber 100 is, as shown in Fig. 1B, includes a base part 1, which is an attaching part the blade rubber 100 to the blade stay 210 and a lip portion 3 swingably coupled to the base part 1 through a neck portion 2. The wiper blade is formed having a sectional shape substantially uniform in a longitudinal direction.

On a section in a direction orthogonal to the longitudinal direction of the wiper blade, the lip portion 3 includes a shoulder portion extending to a side farther than the neck portion on an end part on the neck portion side of the lip portion 3. Moreover, for stabilization of a contact attitude of the wiper blade, a taper portion 4 whose width is gradually reduced in a direction away from the base part 1 from the side close to the base part 1 may be provided. In addition, a degree of gradual reduction in the width of the taper portion 4 may be changed in steps. For example, the lip portion 3 may have a lip tip end part in which a degree of gradual reduction in the width of the taper portion is made smaller on a side close to the tip end away from the base part 1 of the lip portion. In addition, on the lip tip end part, a part whose width is the same or substantially the same from the side close to the base part 1 toward the tip end may be provided. The wiper blade shown in Fig. 1B has a plate-shaped part continuing to the taper portion 4 on the tip end side of the lip portion 3.

The wiper device cleans a surface of a member to be cleaned by bringing at least a part of a tip end of the lip portion 3 into contact with the surface of the windshield, which is the member to be cleaned represented by a glass surface. As a result, at least a part of the tip end of the lip portion 3 constitutes a contact part with the windshield. In the lip portion 3, the contact part is formed by extending in the longitudinal direction of the blade rubber.

For example, on the section in the direction orthogonal to the longitudinal direction of the wiper blade, such an aspect is cited that the neck portion 2 has a width smaller with respect to the base part 1 and the lip portion 3. In addition, for example, the lip portion is an elastic body. As a result, the lip portion 3 is inclined to a wiping direction and has at least a part of the lip portion 3 brought into contact with the surface of the member to be cleaned.

As shown in Fig. 1B, the lip portion 3 has a first side surface 5 continuing from the taper portion 4 and a second side surface 6 on a side opposite to the first side surface 5 and a tip end surface 7 constituting a first edge 8 and a second edge 9 on a side the farthest from the base part 1 of the lip portion 3 together with the first side surface 5 and the second side surface 6. A part of the tip end of the lip portion 3 cut off by the regeneration device is a part including at least the tip end surface 7. For example, the tip end of the lip portion 3 may be cut off in parallel to the tip end surface 7 so as to form a new tip end surface.

As described above, the contact part of the lip portion 3 with the windshield is worn by the use for a long time, and irregular wiping or the like would occur. Patent Document 1 discloses a regeneration cutter for cutting off the tip end of the lip portion and regenerating a blade rubber. However, the regenerated wiper blade regenerated by the regeneration cutter according to Patent Document 1 had the wiping performance lower than the wiping performance of a brand-new product of the wiper blade. Specifically, irregular wiping could be generated at the end part or the like. The reason can be considered to be as follows.

The blade rubber is usually formed of a natural rubber or a synthetic rubber, which is soft. And when the tip end part of the soft blade rubber was cut off by the regeneration cutter according to Patent Document 1, there were such cases that the cut surface of the lip portion of the blade rubber was deformed in various processes of the cutting.

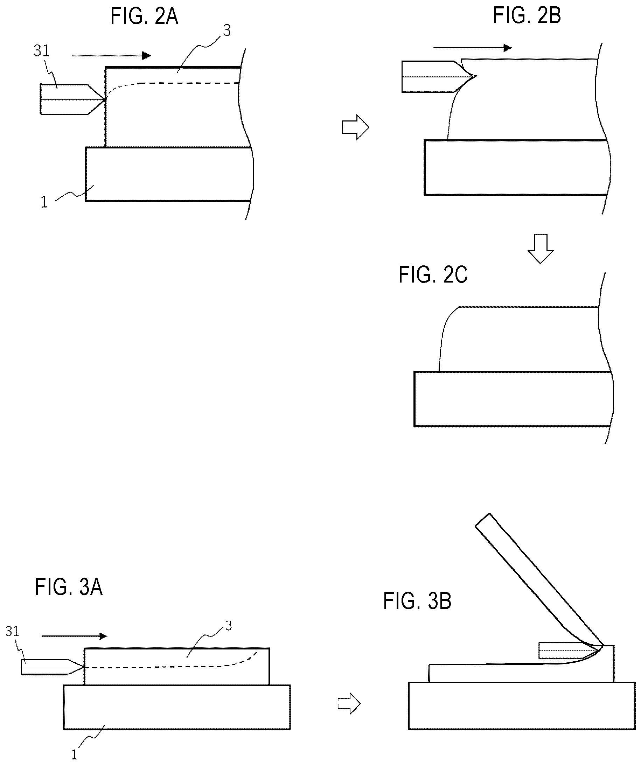

First, at the cutting, a blade portion of the regeneration cutter is brought into contact with a side surface on one end side of the lip portion of the blade rubber (see Fig. 2A) and then, the blade portion is made to enter into the lip portion. At this time, the side surface of the lip portion could be elastically deformed as shown in Fig. 2B by a pressure of the blade portion at the entry. As a result, as shown in Fig. 2C, the end part of the blade rubber after the cutting became an R-surface in some cases. There is a possibility that the regenerated blade rubber having the shape as above could incur irregular wiping on the end surface.

In addition, the blade rubber having the lip portion whose cut surface was deformed might generate wiper blade chatter during the wiping in some cases. If the lip portion after the cutting is deformed, a contact pressure of the lip portion to the glass surface becomes uneven in the longitudinal direction of the blade rubber, and a part with a high contact pressure occurs locally. In the part with a locally high contact pressure, occurrence of a stick slip or hooking between the blade rubber and the glass surface is considered to cause the wiper blade chatter.

Subsequently, the blade portion is made to enter from the side surface on the one end side of the blade rubber, and the cutting of the tip end of the blade rubber proceeds, while it is moved toward the other end side in the longitudinal direction of the blade rubber. At this time, while the blade portion proceeds from the one end to the other end of the lip portion as indicated by a dotted line in Fig. 3A, an advancing direction of the blade portion is shifted upward, and the wiper blade after the cutting had a shape as shown in Fig. 3B in some cases. The thinner the thickness of the part to be cut in the blade rubber was made, the more remarkable the shift in the advancing direction of the blade portion as above was. Note that the shift in the advancing direction of the blade portion is considered to be caused by a force applied to the blade portion for advancing the blade portion, which goes upward easily, since the thickness of the part to be cut of the blade rubber is small. The regenerated blade rubber having the cut surface as above can incur the irregular wiping, wiper blade chatter, and abnormal sound in some cases.

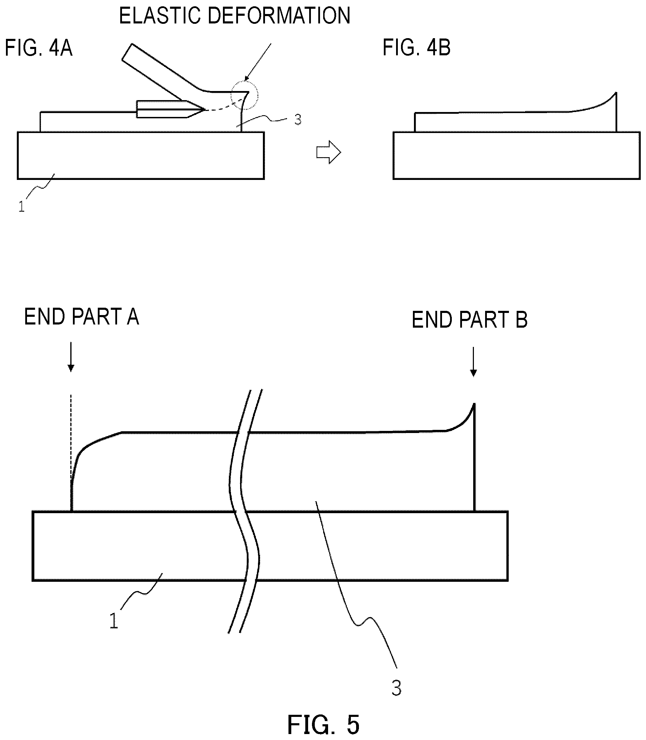

Lastly, even if the blade portion can be made to advance to the other end side of the blade rubber, as shown in Fig. 4A, as the blade portion approaches the side surface on the other end side of the blade rubber, the end part of the lip portion on the other end side was elastically deformed in some cases. It is considered that the expansion on the tip end side of the lip portion 3 in particular is larger than that on the base part 1 side of the lip portion 3 and thus, the elastic deformation as above can occur easily. By means of the expansion of this elastic deformation, the advancing direction of the blade portion was also shifted to an upper direction, and the other end side of the regenerated wiper blade had a bur as shown in Fig. 4B in some cases. The regenerated blade rubber having the cut surface as above also incurs irregular wiping, wiper blade chatter, and abnormal sound in some cases.

As described above, at each process of the beginning of the cutting, during the cutting, and the end of the cutting, there was a reason why the shape of the tip end part of the regenerated blade rubber is deformed. As a result, as shown in Fig. 5, for example, such a regenerated blade rubber that the cut surface has an S-shaped curve from the one end side (end part A) to the other end part (end part B) was obtained in some cases. The inventors made examination so as to prevent the deformation of the cut surface in a manufacturing process of the regenerated blade rubber, that is, in each process of the cutting of the blade rubber, to be able to regenerate a blade rubber with higher accuracy and to obtain a regenerated wiper blade whose wiping performance is as good as that of a brand-new the blade rubber. As a result, the following blade rubber regeneration device, blade rubber regeneration method, and manufacturing method of a regenerated wiper blade were found.

One aspect of a blade rubber regeneration device according to the present disclosure is a blade rubber regeneration device, the blade rubber being provided on a wiper blade used for a wiper device of a windshield of a vehicle, wherein
the wiper blade includes the blade rubber and a blade stay supporting the blade rubber,
the blade rubber has a base part, which is an attaching part of attaching the blade rubber to the blade stay, a lip portion, and a neck portion swingably connecting the lip portion to the base part,
at least a part of a tip end of the lip portion constitutes a contact part contacting with the windshield,
the regeneration device includes a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one end part in the longitudinal direction of the blade rubber, and to relatively move toward an end part B, which is the other end part in the longitudinal direction,
the regeneration device includes:
   a sandwiching member of sandwiching the lip portion;
   an urging member which is brought into contact with the end part B of the lip portion and urges the lip portion to a direction of the end part A; and
   a pressing member which presses the tip end of the lip portions toward the base part,
      the sandwiching member sandwiches at least a part of the lip portion from both side portions of the lip portion on a cross-sectional view in a direction orthogonal to the longitudinal direction of the blade rubber,
      the sandwiching member is disposed at a position capable of sandwiching at least a part into which the blade portion of the lip portion enters, and a position of the sandwiching member with respect to the blade rubber is fixed, and
      the pressing member presses the tip end of the lip portion toward the base part prior to relative movement of the blade portion from the end part A to the end part B.

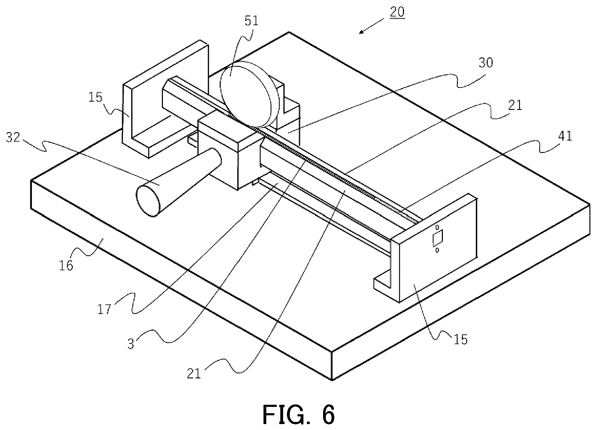

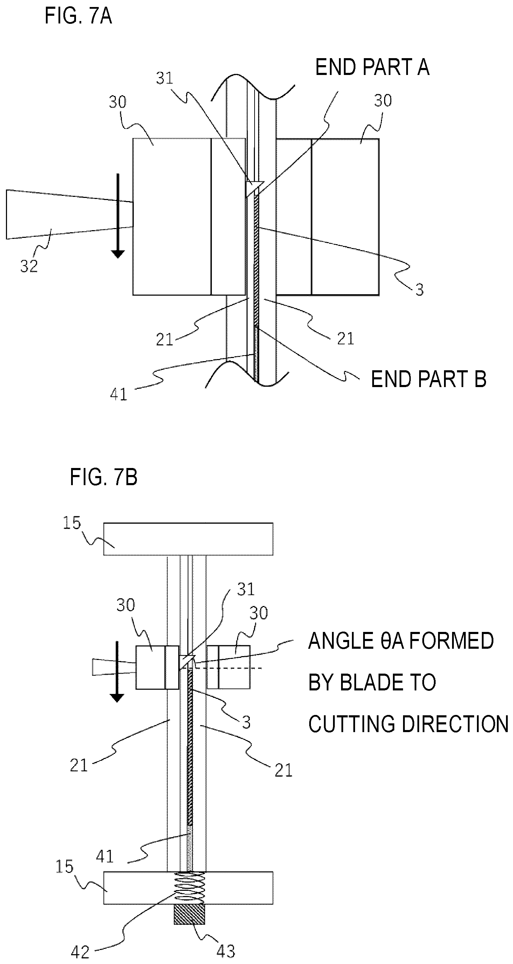

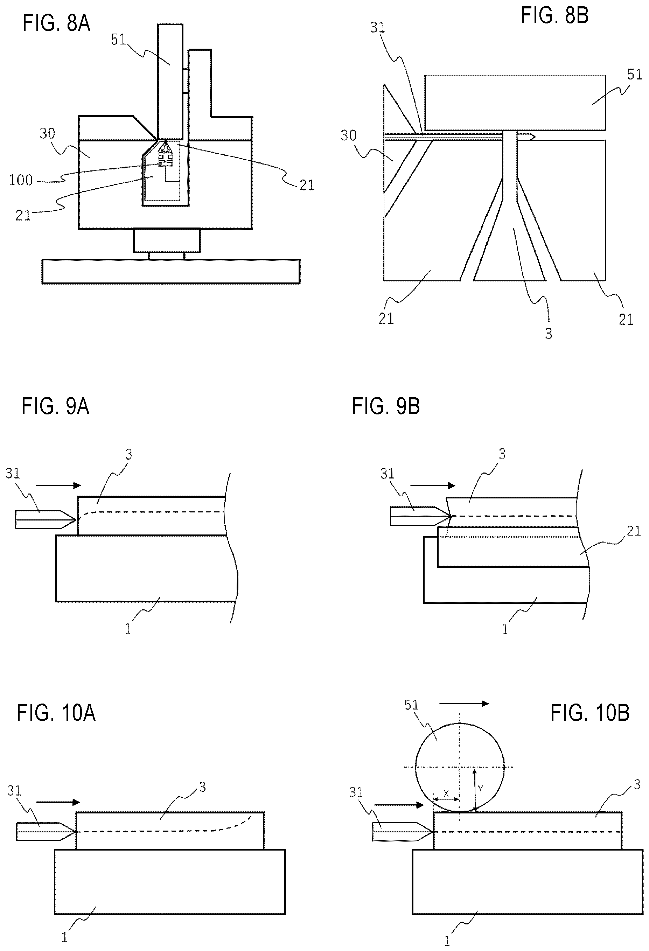

A blade rubber regeneration device according to an aspect of the present disclosure will be explained with Figs. 6, 7A, 7B, 8A, and 8B as examples. Fig. 6 is a schematic diagram illustrating an appearance of a blade rubber regeneration device 20. Figs. 7A and 7B are schematic diagrams for explaining a cutting unit 30 including a blade portion and a motion of the cutting. Fig. 8A is a sectional diagram of a blade rubber shorter-side direction of the cutting unit 30 and a sandwiching member 21, and Fig. 8B is an enlarged view in the vicinity of a blade portion 31.

The blade rubber regeneration device 20 includes the sandwiching member 21 of the lip portion as a blade rubber fixing member for fixing the blade rubber 100. The sandwiching member 21 fixes the blade rubber by sandwiching the lip portion 3 from the shorter-side direction of the blade rubber. For example, the first side surface 5 and the second side surface 6 in Fig. 1B are sandwiched. That is, the sandwiching member 21 sandwiches the lip portion 3 from the both side portions of the lip portion 3 on a cross-sectional view in a direction orthogonal to the longitudinal direction of the blade rubber.

In Fig. 6, the sandwiching member 21 is fixed onto a pedestal 16 by a holding member 15 having an L-shaped section from the longitudinal direction of the blade rubber.

The sandwiching member 21 is, as shown in Fig. 8B (enlarged view of the right side) and Fig. 9B, disposed at a position capable of sandwiching at least a part (end part A) into which the blade portion 31 enters with respect to the lip portion 3. In the drawing, the sandwiching member 21 sandwiches the whole region in the longitudinal direction of the lip portion 3 including a part into which the blade portion 31 enters from the both side portions. And the position of the sandwiching member with respect to the blade rubber is fixed.

Note that an embodiment in which the blade rubber is applied to the regeneration device is not particularly limited. As in Fig. 8A, the blade rubber in a state where the blade stay was removed may be applied to the regeneration device, or the blade rubber in a state including the blade stay may be applied to the regeneration device.

The blade rubber regeneration device 20 includes the blade portion 31 for cutting off the tip end of the lip portion 3 in the longitudinal direction of the blade rubber 100. For example, as in Figs. 6, 7A, and 7B, the blade rubber regeneration device 20 includes the cutting unit 30 and may have the blade portion 31 (not shown in Fig. 6) in the cutting unit 30.

The cutting unit 30 is movable along the longitudinal direction of the blade rubber 100 and the sandwiching member 21. In Fig. 6, the cutting unit 30 can move along a rail 17 which guides the movement. For example, in Fig. 6, by means of a handle 32, the cutting unit 30 is movable manually but may be drivable not manually but by an electric cylinder, a motor or the like.

Note that, to facilitate movement of the cutting unit 30, the cutting unit 30 and the sandwiching member 21 may be non-contact.

Figs. 7A and 7B are bird's eye views from an upper part of the device of the cutting unit 30 in the blade rubber regeneration device 20. Fig. 7A is an enlarged diagram of the vicinity of the cutting unit 30, and Fig. 7B is a diagram of the whole of the blade rubber in the longitudinal direction including the sandwiching member 21. The cutting unit 30 including the blade portion 31 moves in a direction of an arrow in the drawing from the end part A to a direction of the end part B along the longitudinal direction of the blade rubber 100.

And the blade portion 31 is made to enter the lip portion 3 from the side portion of the tip end of the lip portion 3 at the end part A, which is one end part in the longitudinal direction of the blade rubber 100, is relatively moved toward the end part B, which is the other end part in the longitudinal direction, and a part of the tip end of the lip portion 3 is cut off. By performing the cutting as above, a worn / deteriorated part is removed, and the regenerated blade rubber can be obtained.

The illustrated regeneration device 20 is in such an embodiment that the blade portion 31 (cutting unit 30) moves, but it is only necessary that the blade portion 31 can move relatively from the end part A to the end part B. That is, it may be such an embodiment that the cutting unit 30 including the blade portion 31 is fixed, and the sandwiching member 21 which fixes the blade rubber 100 moves. For example, the blade portion 31 preferably moves so as to cut the first edge 8, the second edge 9, and the tip end surface 7. That is, at least a part of the contact part to be removed preferably includes the tip end surface and the tip end side edge of the lip portion 3. Preferably, the blade portion 31 cuts the lip portion 3 so that a surface parallel to the tip end surface to be cut off emerges.

In addition, as shown in Fig. 7A and Fig. 7B, the regeneration device 20 includes an urging member 41 that is brought into contact with the side portion of the tip end of the lip portion 3 at the end part B of the lip portion 3 and urges the lip portion to the direction of the end part A. The urging member 41 is a plate-shaped member, for example, and is inserted into an interval of the sandwiching member 21. The urging member 41 presses the end part B of the lip portion from the end part of the sandwiching member 21 to the direction of the end part A by an elastic member 42 such as a spring.

In addition, as shown in Fig. 6, Fig. 8A, and Fig. 8B, the regeneration device 20 includes a pressing member 51 which presses the tip end of the lip portion 3 toward the direction of the base part 1 of the blade rubber. The pressing member 51 presses the tip end of the lip portion 3 toward the base part 1 prior to the relative movement of the blade portion 31 from the end part A to the end part B. As a result, the shift of the advancing direction of the blade portion 31 to the side of the tip end of the lip portion 3 by the movement of the blade portion 31 is prevented.

For example, as in Fig. 6 and Fig. 8A, the pressing member 51 is provided in the cutting unit 30 and can move in accordance with the movement of the blade portion 31.

The inventors consider the reason why, by means of the aforementioned blade rubber regeneration device 20, the deformation of the cut surface of the lip portion 3 is suppressed, and the regenerated blade rubber with a higher accuracy can be obtained as follows.

The suppression of the deformation at the beginning of the cutting will be explained. The regeneration device 20 includes the sandwiching member 21 that sandwiches the lip portion 3 from the both side portions in the shorter-side direction of the lip portion 3. And the sandwiching member 21 is disposed at a position capable of sandwiching at least a part where the blade portion 31 enters the lip portion 3, and a position of the sandwiching member with respect to the blade rubber is fixed. That is, unlike the cutter in Patent Document 1, in the regeneration device 20, the sandwiching member 21 does not move with respect to the blade rubber even by the movement of the blade portion 31 but sandwiches the lip portion 3.

As described above, it is considered that, by sandwiching the part into which the blade portion 31 of the lip portion 3 enters, the elastic deformation of the lip portion 3 by the pressure when the blade portion 31 is made to enter the side portion of the lip portion 3 is suppressed. Thus, in the lip portion, the end part on an entry part side of the blade portion 31 after the cutting can be suppressed from becoming an R surface.

For example, if the sandwiching member 21 is not present, as in Fig. 2 and Fig. 9A, the end part on the entry-part side of the blade portion 31 can become the R surface by the elastic deformation of the lip portion 3 as indicated by a broken line in some cases. In addition, if a thickness (cutting margin) of the cutting is particularly small, the act itself to make the blade portion 31 enter into the lip portion 3 becomes difficult in some cases due to the elastic deformation of the lip portion 3 caused by the pressure when the blade portion 31 is made to enter the side surface of the lip portion 3. On the other hand, if the sandwiching member 21 sandwiching the lip portion 3 from the both side surfaces is present, the deformation of the cut surface can be suppressed as indicated by the broken line in Fig. 9B. This is considered to be such that the excessive elastic deformation of the lip portion 3 is suppressed at the entry of the blade portion into the lip portion 3, and the pressure is applied uniformly to the lip portion 3.

Note that, in order to suppress the deformation of the entry part of the blade portion 31, it is only necessary for the sandwiching member 21 to sandwich at least the part where the blade portion 31 enters. The sandwiching member 21 may sandwich the lip portion 3 over the whole region in the longitudinal direction of the lip portion 3 as shown in Figs. 7A and 7B.

Subsequently, the suppression on the elastic deformation caused by sprung-up of a cut piece during the cutting will be explained. The regeneration device 20 includes the pressing member 51 which presses the tip end of the lip portion 3 toward the base part 1 prior to the relative movement of the blade portion 31 from the end part A to the end part B. It is considered that, by means of the pressing member 51 as above, the lip portion 3 can be pressed at a position immediately before the cutting by the blade portion 31 and thus, the elastic deformation of the lip portion 3 caused by the sprung-up of the cut piece by the blade portion 31 can be suppressed. That is, by means of the pressing member 51, the shift to the tip end side of the blade rubber in the advancing direction of the blade portion 31 caused by the movement of the blade portion 31 can be prevented. As a result, the advancing direction of the cutting by the blade portion 31 is hardly changed, and the deformation of the cut surface can be suppressed.

For example, if there is no pressing member 51, the advancing direction of the cutting is changed by the elastic deformation of the lip portion 3 as shown in Fig. 3 and Fig. 10A, and the cut surface might be curved as indicated by the broken line in some cases. On the other hand, in Fig. 10B, prior to the blade portion 31, the pressing member 51 moves in an arrow direction together with the blade portion 31, while pressing the lip portion 3 in the direction of the base part 1. That is, the regeneration device 20 performs cutting, while suppressing the elastic deformation by the movement of the blade portion 31 by the pressing member. As a result, it is considered that the lip portion 3 becomes less likely to be elastically deformed, and the deformation of the cut surface can be suppressed as indicated by the broken line. For example, the pressing member 51 and the blade portion 31 move by keeping an interval between the blade portion 31 tip end and the pressing member 51 constant.

In addition, the suppression of the deformation at the end part of the latter half of the cutting will be explained. The regeneration device 20 includes the urging member 41 which is brought into contact with the side portion of the end part B of the lip portion 3 and urges the lip portion to the direction of the end part A. By means of the urging member 41 as above, the expansion caused by the elastic deformation on the tip end side of the lip portion at the end part B can be suppressed and thus, the deformation of the cut surface can be suppressed.

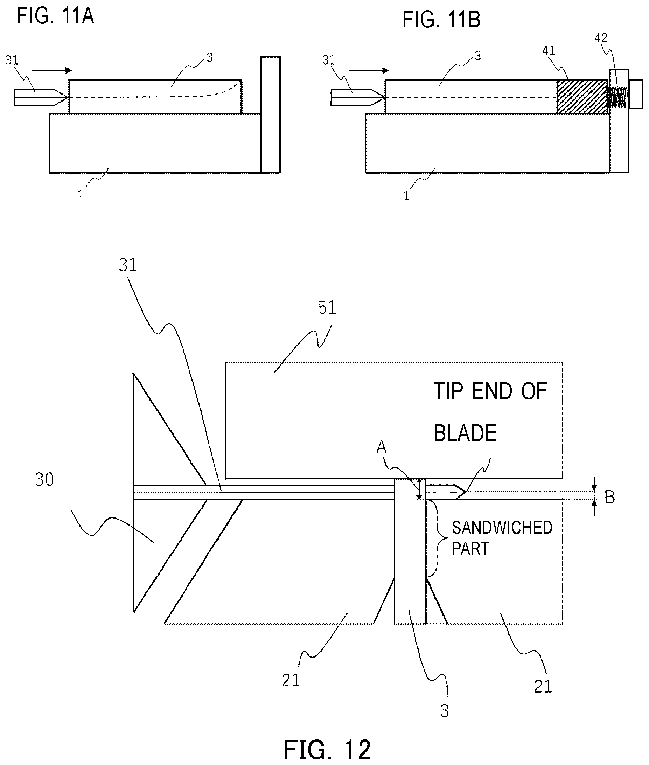

For example, where there is no urging member 41, as shown in Fig. 4 and Fig. 11A, the elastic deformation on the tip end side of the end part of the lip portion becomes larger, and the cut surface is curved as indicated by the broken line. On the other hand, if there is the urging member 41 as in Fig. 11B, the elastic deformation of the lip-portion end part or particularly the expansion on the tip end side, which is the side opposite to the base part 1, can be suppressed and thus, it is considered that the deformation of the cut surface can be suppressed as indicated by the broken line.

Note that even at the rear end of the cut part as above, it is considered that the pressing member 51 exerts the effect for the elastic deformation of the lip portion 3 caused by the sprung-up of the cut piece. However, it is considered that the suppression of the elastic deformation in the cutting direction (longitudinal direction of the blade rubber) only by the pressing member 51 is insufficient. Therefore, the pressing member 51 and the urging member 41 are important in order to sufficiently suppress the deformation of the rear end of the cut part.

As described above, by using the specific sandwiching member, pressing member, and urging member, the elastic deformation of the lip portion can be suppressed during a period from the entry of the blade portion into the lip portion to the completion of the cutting, and it is considered that the deformation of the cut surface of the lip portion can be suppressed. Thus, curving of the cut surface into the S-shape as shown in Fig. 5 can be suppressed, and the blade rubber can be regenerated with higher accuracy.

In addition, as a cutting method, refrigerated cutting in which the elasticity of the lip portion is eliminated or lowered, laser cutting or a water jet cutting for cutting before occurrence of the elastic deformation by extremely raising a cutting power can be considered. However, according to the aforementioned regeneration device 20, as compared with the cutting methods as above, the device cost is kept low and a high mass-productivity and regeneration with high accuracy can be made possible.

Hereinafter, each constitution of the regeneration device 20 of the blade rubber will be explained.

The regeneration device 20 includes the blade portion 31. A blade used for the blade portion 31 only needs to cut off the lip portion by relative movement. An angle formed by the blade (blade angle θA) with respect to the shorter-side direction of the lip portion 3 of the blade is not particularly limited, and it is only necessary to provide the blade portion 31 in the regeneration device 20 so that the angle is preferably 20 to 70°, more preferably 30 to 60° or further preferably 40 to 50°. Fig. 7A is an example in which the angle θA becomes 45°.

On a cross-sectional view in the longitudinal direction of the blade rubber of the regeneration device 20, an angle θB (not shown) formed by the longitudinal direction (the device horizontal surface, for example) of the lip portion 3 and a direction perpendicular to a blade length direction of the blade and parallel to a blade body is, assuming that a case where a blade edge is directed to the base part 1 side as +, preferably 0 to 10°, more preferably 2 to 8°, or further preferably 3 to 7°. When the formed angle θB is within the aforementioned range, it means that the blade is slightly tilted to the base part 1 side of the blade rubber. As a result, the cut pieces can be easily made to escape to the side opposite to the advancing direction of the blade portion.

The blade may be a double edge or a single edge. In the regeneration device 20 shown in Fig. 2 and the like, the double edge is used as the blade 31.

A blade thickness is not particularly limited but is preferably 0.05 to 0.50 mm or more preferably 0.10 to 0.30 mm.

A tip end angle of the blade (blade edge angle) is not particularly limited, either, and is preferably 15 to 55°, more preferably 25 to 50° or further preferably 35 to 45°. Within the aforementioned range, the lip portion can be easily cut off appropriately. The illustrated regeneration device 20 is an example of 45°.

The blade portion 31 only needs to be fixed to the regeneration device 20 (cutting unit 30) by such a force that the angle of the blade does not change during the cutting. For example, it may be fastened by a bolt or the like. The blade portion 31 may be fixed to one side as shown in Fig. 7A. The blade portion 31 may be fixed to both side portions across the lip portion when the regeneration device 20 is viewed from the side of the lip portion tip end part (upper side of the device, for example) by placing the blade portion 31 across the left and right cutting units 30 in Fig. 7A, for example. As a result, the cutting accuracy is further improved.

A feeding speed of the blade (that is, a speed of the aforementioned relative movement) in the regeneration device 20 is not particularly limited as long as it is in such a range that the lip portion 3 can be appropriately cut off and is preferably 500 to 5000 mm/sec, more preferably 800 to 2000 mm/sec or further preferably 900 to 1500 mm/sec.

A slice width of the lip portion 3 cut off by the blade portion 31 is not particularly limited, either, and it accords to a size of the lip portion of the blade rubber to be used. The slice width (a length of the lip portion in the shorter-side direction of the blade rubber in the part to be cut (the length between the first side surface 5 and the second side surface 6)) is preferably 0.1 to 5.0 mm, 0.2 to 2.0 mm, 0.3 to 1.0 mm or the like. A material of the blade portion 31 is not particularly limited but publicly known materials can be used as appropriate in accordance with the blade rubber to be cut. For example, stainless steel, iron or the like can be used.

The regeneration device 20 includes the sandwiching member 21 that sandwiches at least a part of the lip portion 3 from the both side portions of the lip portion 3. The sandwiching member 21 sandwiches and fixes the lip portion 3 and suppresses the elastic deformation caused by the entry of the blade portion. The sandwiching member 21 only needs to be disposed at a position capable of sandwiching the part into which the blade portion 31 of the lip portion enters. The part where the blade portion enters means a part where the elastic deformation of the lip portion by the entry of the blade portion can be suppressed by sandwiching in the vicinity of the contact point between the blade portion and the lip portion. For example, it is a part in the vicinity of the position where the blade portion enters and elastically deformed by the entry of the blade portion when the both side portions of the lip portion are not sandwiched.

The sandwiching member 21 may sandwich the entire lip portion. For example, the sandwiching member 21 can sandwich and fix the whole region in the longitudinal direction of the lip portion from the both side portions by a member sufficiently longer than the length in the longitudinal direction of the blade rubber 100 as shown in Figs. 7A and 7B. In addition, for example, the sandwiching member 21 sandwiches the base part 1 side rather than the position where the blade portion 31 enters.

The material of the sandwiching member 21 is not particularly limited, and publicly known materials such as steel materials including a prehardened steel, stainless steel, aluminum and the like can be adopted.

A pressing force when the lip portion 3 is sandwiched and fixed by the sandwiching member 21 is not particularly limited but can be changed as appropriate in accordance with the material of the blade rubber. The fixation may be performed with a force of such a degree that the lip portion 3 is fixed and the elastic deformation by the entry of the blade portion 31 can be suppressed. In addition, the fixation may be performed with a force of such a degree that the lip portion is not deformed unnecessarily by the sandwiching. A method of fixing is not particularly limited, and publicly known methods such as fastening with a bolt or the like can be adopted.

For example, as a fastening force of a bolt when the lip portion is sandwiched by fastening the sandwiching member 21 with a bolt, 5.0 to 50.0 N/m, 10.0 to 30.0 N/m, or 12.0 to 20.0 N/m can be preferably cited. For example, the sandwiching member 21 preferably sandwiches a position corresponding to the part where the blade portion enters with the aforementioned fastening force.

Fig. 12 is a diagram obtained by further enlarging a periphery of the tip end of the lip portion 3 in Fig. 8B, which is a sectional diagram in the blade rubber shorter-side direction of the cutting unit 30 and the sandwiching member 21. It is assumed that a part where the lip portion 3 is sandwiched by the sandwiching member 21 is a sandwiched part, and a length of a part where the tip end of the lip portion 3 protrudes from the sandwiched part to an outer side of the sandwiching member 21 is a protruding length A of the lip portion.

From a viewpoint that the elastic deformation of the lip portion 3 can be suppressed more easily, A is preferably 0.10 to 1.00 mm, more preferably 0.20 to 0.50 mm, and further preferably 0.30 to 0.40 mm.

In addition, as shown in Fig. 12, a length (shortest distance) from the sandwiched part of the lip portion by the sandwiching member 21 to the tip end of the blade is assumed to be a length B. From the viewpoint that the elastic deformation of the lip portion 3 can be suppressed more easily, B is preferably 0.200 mm or less, more preferably 0.150 mm or less, and further preferably 0.130 mm or less. A lower limit is better if it is smaller, but in order to prevent interference between the blade and the sandwiched part, a length exceeding 0.000 mm is desirable.

B is preferably more than 0.000 mm and 0.200 mm or less, more than 0.000 mm and 0.150 mm or less, more than 0.000 mm and 0.130 mm or less can be cited.

In addition, from the viewpoint that the elastic deformation of the lip portion 3 can be suppressed more easily, a value of B/A is preferably 0.10 to 0.55, more preferably 0.20 to 0.45, or further preferably 0.30 to 0.40.

In addition, a cutting thickness of the tip end of the lip portion 3 corresponding to A-B in Fig. 12 (length in the direction of the base part - lip portion tip end of the blade rubber) may be changed as appropriate in accordance with a purpose of the regeneration, a length of the lip portion before the regeneration, and a degree of deterioration of the lip portion and is not particularly limited. The cutting thickness is preferably 0.05 to 1.00 mm or more preferably 0.10 to 0.50 mm.

The pressing member 51 is such a member that presses the tip end of the lip portion 3 and suppresses the elastic deformation by the movement of the blade portion. The regeneration device 20 includes the pressing member 51 which presses the tip end of the lip portion 3 toward the base part 1 prior to the relative movement of the blade portion 31 from the end part A to the end part B. The pressing member 51 is not particularly limited as long as it can press the lip portion prior to the relative movement of the blade portion 31. A pressing force may be of such a degree that can suppress the elastic deformation of the lip portion 3 caused by sprung-up of the cut piece.

For example, such an embodiment can be cited that a member having a certain degree of hardness is brought into contact with the tip end of the lip portion 3 and is provided at a facing position. That is, the pressing member 51 preferably moves in contact with the tip end of the lip portion 3 and is preferably provided at a position facing the tip end of the lip portion 3. As a result, the pressing force can be changed as appropriate in accordance with the protruding length A of the lip portion 3. The pressing member 51 may be urged by an elastic member such as a spring in the direction of the base part 1 with respect to the lip portion 3 or may not.

The pressing member 51 may be in contact with the sandwiching member 21 or may not be in contact, but it is preferable not to be in contact.

When the blade portion is moved in the longitudinal direction of the blade rubber, as the cutting progresses, the cut pieces of the lip portion are fed into spaces above and in the rear of the tip end of the blade portion. The pressing member 51 preferably weakens the pressing or releases the pressing above and in the rear of the tip end of the blade portion 31 in the relative movement of the blade portion 31 so that the cut pieces of the lip portion gradually fill the space, which does not hinder the progress of the blade portion. As a degree of weaking the pressing, a method of weaking the force to a pressing force of such a degree that does not prevent the advance of the blade portion 31 can be cited.

It is preferable from the viewpoint of regeneration of the blade rubber with higher accuracy that the pressing member 51 releases the pressing so that the cut pieces can easily be fed to the rear of the blade.

For example, as shown in Fig. 6, the pressing member 51 is preferably a disc-shaped member. The pressing member 51 may be fixed to the cutting unit 30 or may be axially supported, but is preferably axially supported from a viewpoint of facilitating the pressing with a constant force. As an embodiment of the pressing member 51 fixed to the cutting unit 30, a disc-shaped member or a convex-shaped member having an R in the direction of the lip portion 3 can be cited. A method of axial support is not particularly limited, either, and publicly known methods such as use of a bearing or the like can be adopted.

With regard to the pressing member 51, from a viewpoint of facilitating reduction of the pressing above and in the rear of the tip end of the blade portion 31 or release of the pressing, the pressing member 51 is preferably a member moving in accordance (in synchronization) with the movement of the blade portion 31 by being provided in the cutting unit 30 together with the blade portion 31 or the like as in Fig. 6. It is preferable that the movement is made by keeping a distance between the tip end of the blade portion 31 and the pressing part by the pressing member 51 constant.

In the illustrated embodiment, the pressing member 51 is a disc-shaped roller member, which is axially supported by the cutting unit 30 and is rotated in contact with the tip end of the lip portion 3 with the relative movement of the cutting unit 30. Since the pressing member 51 rotates in contact with the lip portion 3, the position for pressing or the force for pressing can be kept constant more easily, which is preferable. In addition, the pressing force can be controlled by hardness of the pressing member 51 or the protruding length A of the lip portion 3.

As shown in Fig. 10B, in the longitudinal direction of the tip end of the lip portion 3, a distance between the position corresponding to the blade edge of the blade portion 31 and a contact point between the pressing member 51 and the lip portion 3 is assumed to be X. X is preferably 1 to 30 mm, more preferably 5 to 20 mm, and further preferably 10 to 18 mm. That is, the pressing member 51 preferably presses the lip portion prior to the movement of the blade portion 31 only by the distance of the aforementioned X. Within the aforementioned range, the elastic deformation of the lip portion caused by the sprung-up of cut pieces can be suppressed more easily.

In addition, when the pressing member 51 is a disc-shaped member, as shown in Fig. 10B, a distance between a center of the disc shape and a horizontal surface of the lip portion 3 is assumed to be Y. Y is preferably 5.0 to 100.0 mm, more preferably 10.0 to 70.0 mm or further preferably 20.0 to 50.0 mm.

When X and Y are equal to or smaller than the aforementioned upper limits, the sprung-up of the cut pieces can be prevented more easily. When X and Y are equal to or larger than the aforementioned lower limits, the cutting resistance can be kept favorably.

A value of X / Y is preferably 0.40 to 0.80, more preferably 0.50 to 0.70 or further preferably 0.55 to 0.65.

For example, the lip portion may be pressed so that a value of a radius of the disc-shaped member - Y is preferably 0.01 to 0.2 mm or more preferably 0.05 to 0.15 mm. The value of the radius of the disc-shaped member - Y indicates a degree of deformation of the pressing member by the pressing.

A width of the pressing member 51 (length in the shorter-side direction of the lip portion 3) only needs to be such a degree that the lip portion 3 can be pressed and is not particularly limited. It is preferably 1 to 100 mm, 2 to 50 mm, or 5 to 20 mm.

The hardness of the pressing member 51 only needs to be capable of pressing the lip portion 3 and is not particularly limited. The Wallace hardness of the pressing member 51 is preferably 70 to 100 degrees and more preferably 75 to 80 degrees. Within the aforementioned range, the pressing member can be deformed appropriately, the sprung-up suppression effect is further improved, and an excessive rise of the cutting resistance can be also suppressed.

The Wallace hardness can be acquired by executing measurement in accordance with Japan Industrial Standard (JIS) K6253-2:2012 by using Wallace micro hardness-meter (by Wallace Instruments Limited) as a measurement instrument.

The material of the pressing member 51 is not particularly limited, either, and publicly-known materials can be used. For example, rubber materials such as polyurethane rubber (ester-based polyurethane, ether-based polyurethane and the like), silicone rubber, fluororubber, natural rubber and the like; metals such as aluminum, stainless steel and the like can be cited.

From a viewpoint of satisfying the aforementioned Wallce hardness, rubber materials such as the ester-based polyurethane are preferable.

The regeneration device 20 includes the urging member 41 that is brought into contact with the side portion of the end part B of the lip portion 3 and urges the lip portion to the direction of the end part A. The urging member 41 only needs to urge the end part B to such a degree that the elastic deformation (particularly the elastic deformation on the tip end side of the lip portion) in the longitudinal direction of the lip portion 3 can be suppressed. For example, it may have such a shape that can urge the sandwiched part by the sandwiching member 21 and from the sandwiched part to the tip end side of the lip portion 3 (Fig. 11B) or may have such a shape that can urge the whole surface of the end part B of the lip portion. The urging member 41 preferably has such a shape that can urge the sandwiched part and from the sandwiched part to the tip end side of the lip portion 3.

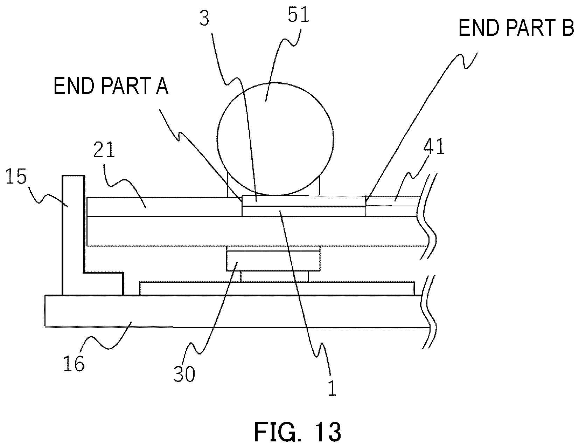

Fig. 13 is a sectional diagram at the position of the lip portion 3 in the longitudinal direction of the lip portion 3 and sandwiched between the sandwiching members 21. The urging member 41 is sandwiched between the sandwiching members 21 which sandwich the lip portion 3 and urge the end part B to the direction of the end part A (the same applies to Fig. 11B). In addition, the urging member 41 itself may be an elastic member. It is preferable that the urging member 41 is not fixed to the sandwiching member 21, that is, the urging member 41 is in a state of being loosely fitted by the sandwiching member 21.

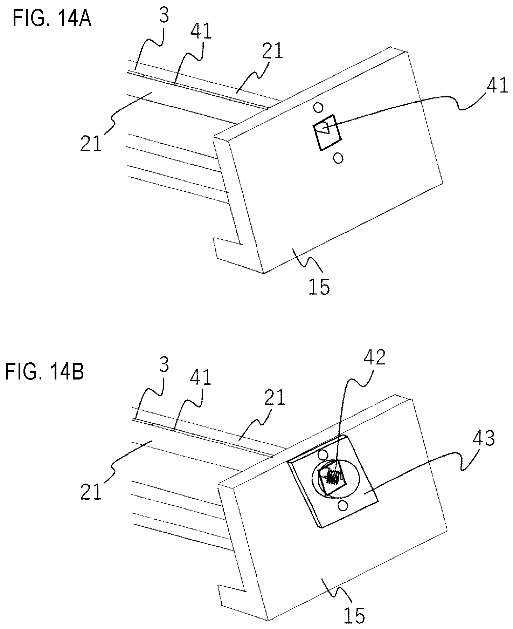

For example, as shown in Fig. 14A, the urging member 41 is inserted between the sandwiching members 21 through a hole provided in the holding member 15. And as shown in Fig. 14B, a spring is inserted as the elastic member 42 so that the urging member 41 can urge the end part B, and the spring is pushed in by a lid 43 for fixing, whereby the end part B is urged by the urging member 41.

The shape of the urging member 41 is not particularly limited but is a plate-shaped member as shown in Fig. 13, for example. In a case of the plate shape, it can be easily applied to between the sandwiching members 21. As the plate-shaped member, a shim plate or the like, for example, can be used in accordance with a size of an interval of the sandwiching members 21. The shim plate is not particularly limited but publicly-known metals such as iron, stainless steel, copper and the like can be used. For example, a cold-rolled steel plate can be cited.

The thickness of the shim plate may be changed as appropriate in view of the thickness of the lip portion 3 and the interval of the sandwiching members 21. For example, 0.1 to 2.0 mm, 0.2 to 1.0 mm can be cited. The length and the height of the shim plate are not particularly limited, either, and those according to the size of the lip portion 3 and the size of the device may be used.

The urging member 41 only needs to be capable of urging the end part B to such a degree that the elastic deformation in the longitudinal direction of the lip portion 3 can be suppressed. For example, when a spring is used as the urging member 41 itself or an elastic member for urging the urging member 41, a spring with an allowable load within a range of preferably 10 to 100 N or more preferably 20 to 60 N may be used. In addition, a spring constant is preferably 1.0 to 10.0 N/mm or more preferably 2.0 to 5.0 N/mm.

The wiper blade or the blade rubber regenerated by the regeneration device is not particularly limited but publicly-known wiper blades or blade rubber can be used. For example, natural rubber, isoprene rubber, chloroprene rubber, ethylene-propylene-diene rubber, acrylonitrile-butadiene rubber, silicone rubber, fluororubber, chlorosulfonated polyethylene rubber, butyl rubber, styrene-butadiene rubber, butadiene rubber, ethylene acrylate rubber, polyurethane, EVA resin and the like can be cited.

The blade rubber may be surface-treated by publicly known methods such as water-repellant coating, graphite coating or the like.

The Wallace hardness of the blade rubber is not particularly limited but it is preferably 45 to 85 degrees or more preferably 70 to 85 degrees. Within the range as above, the elastic deformation of the lip portion can be suppressed more easily.

The length in the longitudinal direction of the blade rubber, the thickness of the lip portion and the like are not particularly limited but those within a publicly-known range can be used.

### Examples

In the following, the present invention will be specifically explained by using Examples. Note that the present invention is not limited to the following Examples. In the following prescription, parts comply with a mass basis unless otherwise noted.

### <Blade Rubber>

The following blade rubber sold in the market (model number: SW1G, by Nippon Wiper Blade, Inc.) was prepared. Note that the length in the longitudinal direction of this blade rubber is 450 mm, is made of natural rubber, and has its tip end side coated with graphite. In addition, the Wallace hardness was 56 degrees.

### (Example 1)

### < Blade Rubber Regeneration device>

As a blade rubber regeneration device according to this Example, a blade rubber regeneration device according to at least one aspect of the present disclosure explained by using Fig. 6, Fig. 7, Fig. 8, Fig. 12, Fig. 13, and Fig. 14 was prepared. More specifically, the following blade rubber regeneration device was prepared. A length between the holding members 15 was set so as to be 1000 mm.

### (Blade Portion 31)

By using the following blade, it was fixed to the cutting unit 30 so as to have the following angles A and B.
Type of blade: High-speed steel (SKH material) (Product name, Material), double-edged, tip end angle (blade edge angle) 45°, three-times polishing (DLC coated product), blade thickness: 0.25 mm
Blade angle θA: 45°
Angle of blade with respect to jig horizontal surface (formed angle θB): 5°
Pressing of blade: the blade was sandwiched in the cutting unit 30 as in Fig. 8B, and the both side portions of the blade were fastened by bolts.

### (Sandwiching Member 21)

The sandwiching member was as follows, and the blade rubber was fixed in accordance with the blade portion 31 so as to have the following slide width, protruding length A and length B.
Material of the sandwiching member 21: Free-machining prehardened steel (item number: NAK55)
- Pressing force: 14.7 N/m (sandwiching by fastening by an M3 bolt with this fastening force)
- Slice width: 0.7 mm
- Protruding length A: 0.35 mm
- Length B (length from the sandwiched part to the tip end of the blade): 0.125 mm

### (Pressing Member 51)

As the pressing member 51, a member fabricated from a standard urethane sheet (item number: UTM, by MISUMI Instruments Inc.) with the Wallace hardness at 80 degrees made of ester-based polyurethane and machined into a disc shape with a diameter of 57.0 mm, a width of 10 mm was used. To the cutting unit 30, the pressing member 51 was fixed at a position where a distance X shown in Fig. 10B is 17 mm and a distance Y is 28.4 mm. In addition, the pressing member 51 was axially supported so as to be rotatable with respect to the cutting unit 30 by a bearing cam follower (item number: CFUA3-10, by MISUMI Instruments, Inc.). And the pressing member 51 is brought into contact with the lip portion (value of radius of the disc - Y = 0.1 mm) and was fixed so that the pressing member 51 is rotatable by the movement of the cutting unit 30. By bringing them into contact in this way, the tip end of the lip portion protruding from the sandwiching member 21 by the aforementioned protruding length A was pressed by the pressing member 51. In addition, by means of the aforementioned constitution, the pressing member 51 was constituted capable of pressing the lip portion prior to the movement of the blade for the distance of X.

### (Urging Member 41)

As the urging member 41, a shim plate made of a cold-rolled steel plate with a length of 50 mm, a height of 10 mm, a thickness of 0.6 mm was passed through the sandwiching members 21 as shown in Figs. 7B and 14B and made to urge the end part B of the blade rubber to the direction of the end part A by using a spring 42 and the lid 43. As the spring 42, a spring (model number: WL18-35, by MISUMI Instruments, Inc.) with a spring constant of 2.9 N/mm, an allowable load of 30 to 50 N was used.

### (Cutting)

As described above, in the regeneration device 20 in which the blade rubber is fixed, by moving the cutting unit 30 by using a robo cylinder (item number: RCS3-CT8C, by IAI CORPORATION) so that the feeding speed of the blade becomes 1000 mm/sec, the lip portion was cut from the end part A to the end part B, and the regenerated blade rubber was obtained.

### (Comparative Example 1)

In the Example 1, the pressing force of the sandwiching member 21 was set to 0 N/m. In addition, the pressing member and the urging member were not used. Similarly to the Example 1 other than that, a regenerated blade rubber was obtained.

### (Comparative Example 2)

In the Example 1, the pressing member and the urging member were not used. Similarly to the Example 1 other than that, a regenerated blade rubber was obtained.

### (Comparative Example 3)

In the Example 1, the urging member was not used. Similarly to the Example 1 other than that, a regenerated blade rubber was obtained.

### (Comparative Example 4)

In the Example 1, the pressing force of the sandwiching member 21 was set to 0 N/m, the protruding length A to 2 mm, and the length B to 0.125 mm. Similarly to the Example 1 other than that, a regenerated blade rubber was obtained.

### (Evaluation 1)

The obtained regenerated blade rubber was evaluated by the following procedure.

The cutting unit 30 was removed from the regeneration device used for the cutting, and such a state was brought about that no object was present above the cut surface in the vertical direction of the regenerated blade rubber. Then, a super high-speed / high-accuracy laser dimension-measuring instrument (item number: LS-9030, by Keyence Corporation, maximum measurement range: 30 mm) was placed on the surface of the flat plate 16 of the regeneration device so that the regenerated blade rubber was located between a laser-light projecting part and a light receiving part of the high-speed / high-accuracy laser dimension-measuring instrument.

At this time, a distance between a reference position for the distance measurement of the high-speed / high-accuracy laser measuring instrument and a surface of a flat plate 16 was adjusted so that all the cut surfaces in the longitudinal direction were located below the reference position in the vertical direction. Then, the high-speed / high-accuracy laser measuring instrument was moved parallel to the longitudinal direction of the regenerated blade rubber, and distances (heights) from the reference position of the cut surface at the end part A, at a middle point between the end part A and the end part B, and at the end part B of the regenerated blade rubber were measured.

In addition, assuming that the end part A with respect to the blade rubber entire length of 450 mm is 0, a distance (cut distance) for which the blade progressed toward the end part B without being removed from the blade rubber, which is a regeneration target, was set to P (mm).

The evaluation result is shown in Table 1.

**[Table 1]**

| | Height | | | Distance P (mm) |
|---|---|---|---|---|
| | End part A | Middle point | End part B | |
| Example 1 | 10.000 | 9.915 | 9.825 | 450 |
| Comparative Example 1 (*1) | 9.775 | 9.775 | 9.775 | 0 |
| Comparative Example 2 (*2) | 10.001 | 9.775 | 9.775 | 100 |
| Comparative Example 3 | 10.000 | 9.914 | 9.775 | 450 |
| Comparative Example 4 | 10.000 | 9.000 | 8.125 | 450 |

| | | | | |
|---|---|---|---|---|
| *1: The blade could not be made to enter the side surface on the blade rubber end part A side, and cutting was impossible. *2: The blade was removed to the tip end surface side at a position where a distance from the end part A is 100 mm, and the cutting of the blade rubber from the position to the end part B was impossible. | | | | |

### (Evaluation 2)

Wiping performances of the regenerated blade rubber fabricated in the Example 1 and Comparative Examples 3 to 4 were evaluated as follows. Note that, for the Comparative Examples 1 and 2, the evaluation was not made, since the regeneration of the blade rubber could not be completed.

### <Evaluation Method>

The wiping performance test for the regenerated blade rubber was performed in compliance with the Japan Industrial Standard (JIS) D5710: 1998 Automotive parts - wiper arms and wiper blades. A test device including a front-side windshield, a wiper arm, a wiper link, a wiper motor for an automobile ("Wish" (product name) (by Toyota Motor Corporation) was prepared.
- Windshield (windshield for Wish by Toyota Motor Corporation; model number: AZE/ZNE10G 14G 11W by AGC)
- Windshield wiper motor (model number: 85110-1A080; genuine part of Toyota Motor Corporation)
- Wiper arm (model number: 85211-68010; genuine part of Toyota Motor Corporation)
- Stabilized DC power supply (model name: PSW-60L30; (by TEXIO TECHNOLOGY CORPORATION))
- Grip shape of wiper: U-hook type
- Pressing force of wiper blade: 18 N/m (*arm pressing force per 1 m of a wiper blade)

To the wiper arm of this testing device, the regenerated blade rubber to which a blade stay was attached was attached in a regular use state. At this time, attachment was performed such that the end part A side of the regenerated blade rubber was on an inner peripheral side of a windshield, while the end part B side is on an outer peripheral side of the windshield.

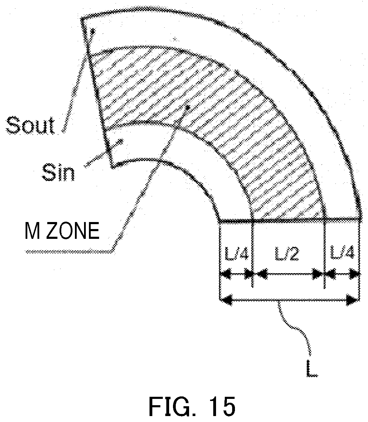

After water droplets are sprinkled in a mist state over the surface of the windshield, the wiper blade was made to reciprocate once, and the number of lines remaining without being wiped was visually determined from a place away from the surface of the windshield by 50 cm. Note that this evaluation was performed in an environment of an ambient temperature of 25°C and humidity of 50%RH. Thus, the aforementioned determination was made at 1 second after the wiping was completed on the basis of the aforementioned standard. Then, the number of remaining lines of water droplets without being wiped in three zones (Sin, M, Sout, see Fig. 15) on the windshield was counted.

In addition, during the wiping test, presence / absence of remarkable wiper blade chatter and abnormal sound was also observed. Note that the M zone is a wiping range of a shaded part in a wiping area made by reciprocating of the wiper blade (Fig. 15), Sin is a wiping range other than the M zone in the aforementioned wiping area, which is a wiping range inside the M zone, and Sout is a wiping range other than the M zone in the aforementioned wiping area, which is a wiping range outside the M zone. In addition, L indicates a length in the longitudinal direction of the wiper blade.

In addition, as a control experiment, the blade rubber before the regeneration was also offered to the aforementioned wiping test and evaluated. The result is shown in Table 2.

**[Table 2]**

| | Zone | | | | | | | | |
|---|---|---|---|---|---|---|---|---|---|
| | Sin | | | M | | | Sout | | |
| | Hair line (number) | Heavier line (number) | Wide line (number) | Hair line (number) | Heavier line (number) | Wide line (number) | Hair line (number) | Heavier line (number) | Wide line (number) |
| Control | 1 | 0 | 0 | 1 | 0 | 0 | 0 | 0 | 0 |
| Example 1 | 1 | 0 | 0 | 0 | 0 | 0 | 1 | 0 | 0 |
| Comparative Example 3 | 1 | 1 | 0 | 0 | 0 | 0 | 5 | 4 | 2 |
| Comparative Example 4 | 5 | 4 | 2 | 1 | 0 | 0 | 0 | 0 | 3 |

| | | | | | | | | | |
|---|---|---|---|---|---|---|---|---|---|
| "Hair line": Extremely-thin unwiped streak with a width of 0.5 mm or less "Heavier line": Thin unwiped streak with a width of 1 mm or less "Wide line": Band-shaped unwiped part with a width of about 1 to 20 mm. Including several hair lines and heavier lines as well as a thin-film shaped unwiped part. | | | | | | | | | |

Note that in the aforementioned standard, it is regulated that the wiping performance in each zone should be a value or less shown in Table 3.

**[Table 3]**

| Item | M zone | | | S zone | | |
|---|---|---|---|---|---|---|
| | Hair line | Heavier line | Wide line | Hair line | Heavier line | Wide line |
| Initial wiping performance | 3 | 1 | 0 | 5 | 2 | 0 |
| Wiping performance after endurance test | 5 | 2 | 0 | 7 | 3 | 2 |

| | | | | | | |
|---|---|---|---|---|---|---|
| Unit: number | | | | | | |

In addition, in the aforementioned wiping test, presence / absence of occurrence of wiper blade chatter were also evaluated. The evaluation result is shown in Table 4.

**[Table 4]**

| | Presence / absence of occurrence of wiper blade chatter during wiping test |
|---|---|
| Control | None |
| Example 1 | None |
| Comparative Example 3 | Occurred |
| Comparative Example 4 | Occurred |

The present disclosure relates to following constitutions or method.

### (Constitution 1)

A blade rubber regeneration device, the blade rubber being provided on a wiper blade used for a wiper device of a windshield of a vehicle, wherein
the wiper blade comprises the blade rubber and a blade stay supporting the blade rubber,
the blade rubber has a base part, which is an attaching part of attaching the blade rubber to the blade stay, a lip portion, and a neck portion swingably connecting the lip portion to the base part,
at least a part of a tip end of the lip portion constitutes a contact part contacting with the windshield,
the regeneration device comprises a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one end part in the longitudinal direction of the blade rubber, and to relatively move toward an end part B, which is the other end part in the longitudinal direction,
the regeneration device comprises:
   a sandwiching member of sandwiching the lip portion;
   an urging member which is brought into contact with the end part B of the lip portion and urges the lip portion to a direction of the end part A; and
   a pressing member which presses the tip end of the lip portions toward the base part,
      the sandwiching member sandwiches at least a part of the lip portion from both side portions of the lip portion on a cross-sectional view in a direction orthogonal to the longitudinal direction of the blade rubber,
      the sandwiching member is disposed at a position capable of sandwiching at least a part into which the blade portion of the lip portion enters, and a position of the sandwiching member with respect to the blade rubber is fixed, and
      the pressing member presses the tip end of the lip portion toward the base part prior to relative movement of the blade portion from the end part A to the end part B.

### (Constitution 2)

The blade rubber regeneration device according to constitution 1, wherein
the pressing member weakens pressing or releases pressing above and in a rear of a tip end of the blade portion in the relative movement of the blade portion.

### (Constitution 3)

The blade rubber regeneration device according to constitution 1 or 2, wherein
the sandwiching member is a member sandwiching the whole region in a longitudinal direction of the lip portion from the both side portions.

### (Constitution 4)

The blade rubber regeneration device according to any one of constitutions 1 to 3, wherein
assuming that a length from a sandwiched part of the lip portion by the sandwiching member to a tip end of a blade is a length B, the length B is 0.200 mm or less.

### (Constitution 5)

The blade rubber regeneration device according to any one of constitutions 1 to 4, wherein
the pressing member is a disc-shaped roller member rotating in contact with the tip end of the lip portion.

### (Method 6)

A blade rubber regeneration method, the blade rubber being provided in a wiper blade used for a wiper device of a windshield in a vehicle,
the method comprising:
a process of fixing the blade rubber to the regeneration device according to any one of constitutions 1 to 5; and
a process of cutting off a part of a tip end of a lip portion of the blade rubber by the regeneration device.

### (Method 7)

A regenerated blade rubber manufacturing method, the method regenerating a blade rubber provided in a wiper blade used for a wiper device of a windshield in a vehicle,
the method comprising:
a process of fixing the blade rubber to the regeneration device according to any one of constitutions 1 to 5; and
a process of obtaining the regenerated blade rubber by cutting off a part of a tip end of a lip portion of the blade rubber by the regeneration device.

### (Constitution 8)

A blade rubber regeneration device, the blade rubber being for a wiper blade, wherein
at least a part of a tip end of the blade rubber constitutes a contact part contacting with a wiping target object,
the regeneration device comprises a blade portion cutting off the tip end of the blade rubber in a longitudinal direction of the blade rubber,
the regeneration device cuts off the tip end of the blade rubber by causing the blade portion to enter the blade rubber from a side portion of the tip end of the blade rubber at an end part A, which is one end part in a longitudinal direction of the blade rubber, and to relatively move toward an end part B, which is the other end part in the longitudinal direction, and
the regeneration device further comprises:
   a sandwiching member which sandwiches at least a part of the blade rubber from both side portions of the blade rubber on a cross-sectional view of the blade rubber in a direction orthogonal to the longitudinal direction of the blade rubber;
   an urging member which is brought into contact with the end part B of the blade rubber and urges the blade rubber to a direction of the end part A; and
   a pressing member of the tip end of the blade rubber, which presses the tip end prior to the movement of the blade portion and prevents a shift of the blade portion to the tip end side in an advancing direction of the blade portion by the movement.

The present disclosure is not limited to the embodiments described above, and various changes and modifications can be made without departing from the spirit and scope of the present invention. Accordingly, the following claims are appended to set forth the scope of the disclosure.

This application claims priority based on Japanese Patent Application No. 2022-156513 filed on September 29, 2022, and Japanese Patent Application No. 2023-067140 filed on April 17, 2023, the entire contents of which are incorporated herein.

3: Lip portion, 20: blade rubber regeneration device, 21: sandwiching member, 30: cutting unit, 31: blade portion, 41: urging member, 51: pressing member

## Claims

1. A blade rubber regeneration device, the blade rubber being provided on a wiper blade used for a wiper device of a windshield of a vehicle, wherein
the wiper blade comprises the blade rubber and a blade stay supporting the blade rubber,
the blade rubber has a base part, which is an attaching part of attaching the blade rubber to the blade stay, a lip portion, and a neck portion swingably connecting the lip portion to the base part,
at least a part of a tip end of the lip portion constitutes a contact part contacting with the windshield,
the regeneration device comprises a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one end part in the longitudinal direction of the blade rubber, and to relatively move toward an end part B, which is the other end part in the longitudinal direction,
the regeneration device comprises:
a sandwiching member of sandwiching the lip portion;
an urging member which is brought into contact with the end part B of the lip portion and urges the lip portion to a direction of the end part A; and
a pressing member which presses the tip end of the lip portions toward the base part,
the sandwiching member sandwiches at least a part of the lip portion from both side portions of the lip portion on a cross-sectional view in a direction orthogonal to the longitudinal direction of the blade rubber,
the sandwiching member is disposed at a position capable of sandwiching at least a part into which the blade portion of the lip portion enters, and a position of the sandwiching member with respect to the blade rubber is fixed, and
the pressing member presses the tip end of the lip portion toward the base part prior to relative movement of the blade portion from the end part A to the end part B.

2. The blade rubber regeneration device according to claim 1, wherein
the pressing member weakens pressing or releases pressing above and in a rear of a tip end of the blade portion in the relative movement of the blade portion.

3. The blade rubber regeneration device according to claim 1 or 2, wherein
the sandwiching member is a member sandwiching the whole region in a longitudinal direction of the lip portion from the both side portions.

4. The blade rubber regeneration device according to any one of claims 1 to 3, wherein
assuming that a length from a sandwiched part of the lip portion by the sandwiching member to a tip end of a blade is a length B, the length B is 0.200 mm or less.

5. The blade rubber regeneration device according to any one of claims 1 to 4, wherein
the pressing member is a disc-shaped roller member rotating in contact with the tip end of the lip portion.

6. A blade rubber regeneration method, the blade rubber being provided in a wiper blade used for a wiper device of a windshield in a vehicle,
the method comprising:
a process of fixing the blade rubber to the regeneration device according to any one of claims 1 to 5; and
a process of cutting off a part of a tip end of a lip portion of the blade rubber by the regeneration device.

7. A regenerated blade rubber manufacturing method, the method regenerating a blade rubber provided in a wiper blade used for a wiper device of a windshield in a vehicle,
the method comprising:
a process of fixing the blade rubber to the regeneration device according to any one of claims 1 to 5; and
a process of obtaining the regenerated blade rubber by cutting off a part of a tip end of a lip portion of the blade rubber by the regeneration device.

8. A blade rubber regeneration device, the blade rubber being for a wiper blade, wherein
at least a part of a tip end of the blade rubber constitutes a contact part contacting with a wiping target object,
the regeneration device comprises a blade portion cutting off the tip end of the blade rubber in a longitudinal direction of the blade rubber,
the regeneration device cuts off the tip end of the blade rubber by causing the blade portion to enter the blade rubber from a side portion of the tip end of the blade rubber at an end part A, which is one end part in a longitudinal direction of the blade rubber, and to relatively move toward an end part B, which is the other end part in the longitudinal direction, and
the regeneration device further comprises:
a sandwiching member which sandwiches at least a part of the blade rubber from both side portions of the blade rubber on a cross-sectional view of the blade rubber in a direction orthogonal to the longitudinal direction of the blade rubber;
an urging member which is brought into contact with the end part B of the blade rubber and urges the blade rubber to a direction of the end part A; and
a pressing member of the tip end of the blade rubber, which presses the tip end prior to the movement of the blade portion and prevents a shift of the blade portion to the tip end side in an advancing direction of the blade portion by the movement.
